# EUROPEAN PATENT SPECIFICATION

(11) **EP 3 063 925 B1**
(45) Date of publication and mention of the grant of the patent: **06.09.2017**
(21) Application number: 14799924.7
(22) Date of filing: 27.10.2014
(51) Int. Cl.: H04L 29/08, H04L 12/58

(54) **SYNCHRONIZING EVENT HISTORY FOR MULTIPLE CLIENTS**
EREIGNISVORGESCHICHTE SYNCHRONISATION FÜR MEHRERE CLIENTS
SYNCHRONISATION D'HISTORIQUE D'ÉVÈNEMENT POUR PLUSIEURS CLIENTS

(30) Priority: 29.10.2013 US 201314066655
(43) Date of publication of application: 07.09.2016
(73) Proprietor: Microsoft Technology Licensing, LLC, Redmond, WA 98052 (US)
(72) Inventor: DAI, Fei, Redmond, Washington 98052-6399 (US); TANG, Lan, Redmond, Washington 98052-6399 (US); SAHA ADITI, Aditi, Redmond, Washington 98052-6399 (US); VENKATAYOGI, Pranathi, Redmond, Washington 98052-6399 (US); PARAMESHWAR, Suresh, Redmond, Washington 98052-6399 (US); LOUIE, Darren, Redmond, Washington 98052-6399 (US)
(74) Representative: Goddar, Heinz J.
(86) International application number: PCT/US2014/062311
(87) International publication number: WO 2015/065861

(56) References cited:
- WO-A1-2013/123870
- US-A1- 2007 283 011
- US-A1- 2008 155 112

## Description

### BACKGROUND

Many network applications on a client device, such as a chat application, an e-mail application, or a calendar application, may have data events that are synchronized with a synchronization server over a network. The synchronization server may track the frequency of synchronizations for a number of applications on a number of client devices, so that the synchronization server does not have to perform a complete synchronization during each synchronization session. As more client devices are added, the amount of data storage used by the synchronization server may greatly increase.

US 2007/283011 A1 discloses a machine-implemented method, comprising creating a synchronization state reference at a client device that sends it to a synchronization server, said synchronization state reference comprising a list of sequences of event identifiers delivered to a client device, sending the synchronization state reference from the synchronization server to the client device, encrypting the synchronization state reference to create a client-opaque synchronization state reference, receiving a synchronization request with the synchronization state reference from the client device and determining a synchronization update based on the synchronization state reference.

WO 2013/123870 A1 relates to a method and device for achieving data roaming. The method comprises a client obtaining a data roaming voucher uniquely corresponding to user logon information, the client sending a data roaming request with the data roaming voucher to a data roaming server, and according to the data roaming voucher contained in the received data roaming request, the data roaming server verifying whether the data roaming request is valid, and transmitting roaming data between the client and the data roaming server if the data roaming request is valid. Before data communication is conducted between a client and a data roaming server, the step of verifying the validity of a user data roaming request is also required. In addition, the data roaming server uses a user network system structure in a catalogue form, thereby ensuring the file locating expandability and universality.

US 2008/155112 A1 discloses systems and methods for transmitting and updating information feeds from a server to a client to increase bandwidth efficiency and improve the timeliness of information feed updates. Using OMA DS protocols, the updating of RSS feeds, for example, may be performed without having to transfer an entire RSS feed. That is, in some arrangements, only the new RSS items are synchronized with the client. A server may alert the client when a new RSS item has been added to an RSS feed. A synchronization session may then be initialized between the server and the client. A client may send a synchronization alert to the server identifying the feed or feeds for which the synchronization is desired. The server may respond with one or more new items corresponding to the identified feeds. RSS item identification information may further be mapped between the client and the server.

### SUMMARY

This Summary is provided to introduce a selection of concepts in a simplified form that is further described below in the Detailed Description. This Summary is not intended to identify key features or essential features of the claimed subject matter, nor is it intended to be used to limit the scope of the claimed subject matter.

Embodiments discussed below relate to increasing the scalability of a synchronization server with a client-opaque synchronization state reference. The synchronization server may create a synchronization state reference. The synchronization server may send the synchronization state reference to a client device. The synchronization server may receive a synchronization request with the synchronization state reference from the client device. The synchronization server may determine a synchronization update based on the synchronization state reference.

### DRAWINGS

In order to describe the manner in which the above-recited and other advantages and features can be obtained, a more particular description is set forth and will be rendered by reference to specific embodiments thereof which are illustrated in the appended drawings. Understanding that these drawings depict only typical embodiments and are not therefore to be considered to be limiting of its scope, implementations will be described and explained with additional specificity and detail through the use of the accompanying drawings.
FIG. 1 illustrates, in a block diagram, one embodiment of a data network.
FIG. 2 illustrates, in a block diagram, one embodiment of a computing device.
FIG. 3 illustrates, in a block diagram, one embodiment of an event identifier log.
FIGS. 4a-c illustrate, in block diagrams, embodiments of synchronization updates for reference event sequences.
FIGS. 5a-c illustrate, in block diagrams, embodiments of synchronization state reference updates.
FIG. 6 illustrates, in a block diagram, one embodiment of a synchronization request.
FIG. 7 illustrates, in a block diagram, one embodiment of a synchronization package.
FIG. **8** illustrates, in a flowchart, one embodiment of a method for executing an initial synchronization at the synchronization server.
FIG. **9** illustrates, in a flowchart, one embodiment of a method for executing a synchronization update at the synchronization server.
FIG. **10** illustrates, in a flowchart, one embodiment of a method for updating a synchronization state reference at the synchronization server.
FIG. **11** illustrates, in a flowchart, one embodiment of a method for sending a synchronization request from a client device.
FIG. **12** illustrates, in a flowchart, one embodiment of a method for receiving a synchronization package at a client device.

### DETAILED DESCRIPTION

Embodiments are discussed in detail below. While specific implementations are discussed, it should be understood that this is done for illustration purposes only. A person skilled in the relevant art will recognize that other components and configurations may be used without parting from the scope of the subject matter of this disclosure. The implementations may be a machine-implemented method, a tangible machine-readable medium having a set of instructions detailing a method stored thereon for at least one processor, a client device, or a synchronization server.

A synchronization server may assign an event identifier to each event that passes through the synchronization server. The event identifier may be based on the event arrival time, so that later events have a bigger event identifier than earlier event identifiers. For example, the event identifier may be the number of milliseconds since January 1, 1970. If two events arrive in the same millisecond, the later event may have an event identifier based of the arrival time in milliseconds plus one.

A synchronization state reference may be a list of delivered sequences, with each delivered sequence being a range of delivered event identifiers. The delivered sequence may have an inclusive lower bound and an inclusive upper bound. For example, if the synchronization reference state may contain a range from 1001 to 2000, then an event with an event identifier between 1001 and 2000 may be synchronized with the client device. The delivered segments in a synchronization state reference may be ordered and nonoverlapping. The ranges of undelivered event identifiers between delivered segments may be referred to as gaps. The synchronization server may create and collapse sequences and gaps during the event synchronization process. The synchronization may be considered complete after the elimination of the gaps.

For an initial synchronization, the client device may specify a start time and a batch size. In response, the client device may receive a synchronization state reference and an availability flag. The synchronization server may encrypt the synchronization state reference, so that the synchronization state reference may be indecipherable by the client, referred to here as "client-opaque". If more events are available, the client device may use the synchronization state reference to request more events. Otherwise, the client device may save the client-opaque synchronization state reference for future synchronization. The client-opaque synchronization state reference may save space on the synchronization server, while saving processing power at the client device.

The client device may continue synchronizing with an earlier synchronization state reference when the synchronization server indicates available events remain, time has elapsed since the last synchronization and the client device seeks to check if new events have arrived, or the client device seeks to push the start time backward to get the earlier events. The incremental synchronization request may contain a start time identifier, batch size, and synchronization state reference. The synchronization server may return an event list as a synchronization update, an updated synchronization state reference, and an availability flag indicating whether events remain. The synchronization server may initially set the event list to empty, the synchronization state reference to the state provided by the client device, and the availability flag to true. The synchronization server may find the last gap in the synchronization state reference within the synchronization scope. If no gap exists, the synchronization server may set the availability flag to false. Otherwise, the synchronization server may retrieve the events within the most recent gap and append them to the event list. The synchronization server may update the synchronization state reference to include the added events. The synchronization server may close the gap if no events remain.

The synchronization state reference may be small, containing one or two delivered sequences. Specifically, the synchronization state reference may collapse to a single delivered sequence after the server returns a false availability flag and two delivered sequences. However, the number of delivered segments may grow if the client conducts multiple incremental syncs, stopping when the availability flag is still true. The client device may move the start time forward beyond the end time of a given delivered sequence. In this case, gaps around old segments may not be filled. To control the size of the synchronization state reference, the synchronization server may remove the first delivered sequence from the synchronization state reference, if the synchronization state reference is larger than a given limit. After the synchronization state reference pruning, the synchronization server may deliver certain events again to the client in the subsequent incremental synchronizations. The client device may detect these duplicated events using the event identifier, and drop the duplicates accordingly.

The client device may edit or delete an existing event by adding a new event with a reference to the original event. After receiving the new event, the client device may update or delete the original event in the local storage.

When synchronizing multiple event lists, the synchronization server may order each event list by the last updated time, which may be equivalent to the maximum event identifier of an event list. Using the same incremental synchronization protocol, the client device may get a list of recently updated event lists. After the names of updated event list is known, the client may then synchronize a small set of event list to get each new events.

Thus, in one embodiment, a client-opaque synchronization state reference may increase the scalability of a synchronization server. The synchronization server may create a synchronization state reference. The synchronization server may send the synchronization state reference to a client device. The synchronization server may receive a synchronization request with the synchronization state reference from the client device. The synchronization server may determine a synchronization update based on the synchronization state reference.

The client device may receive a client-opaque synchronization reference from a synchronization server. The client device may preserve the client-opaque synchronization state reference. The client device may send a synchronization request with the client-opaque synchronization state reference.

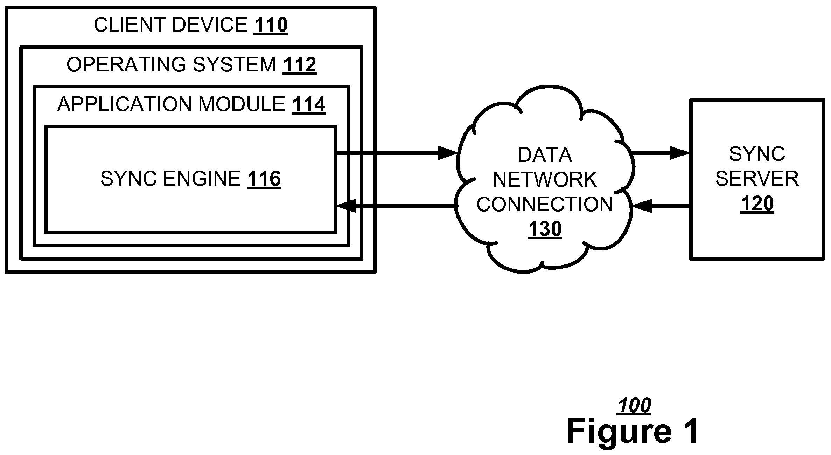

FIG. 1 illustrates, in a block diagram, one embodiment of a data network 100. A client device 110 may execute an operating system 112. An operating system 112 is a set of software applications that manage the use of hardware resources by an application module 114, as well as interactions between application modules 114. An application module 114 is a software application, or an aspect of a software application, such as a chat application.

The application module 114 may manage a local set of data for the user that may be synchronized with a remote set of data stored on the cloud. The application module 114 may have a synchronization engine (sync engine) 116 that synchronizes the local data set with the cloud data set. The synchronization engine 116 may connect to a synchronization server (sync server) 120 via a data network connection 130. The synchronization server 120 may refer to a single server or a distributed set of servers that may access the cloud data set. Alternately, a peer in a peer-to-peer network may perform the synchronization functions of the synchronization server 120 with the computing device 110. The data network connection 130 may be an internet connection, a wide area network connection, a local area network connection, or other type of data network connections. The synchronization engine 116 may alert the synchronization server to any adjustments to the synchronization scheme or receive synchronization over the data network connection 130.

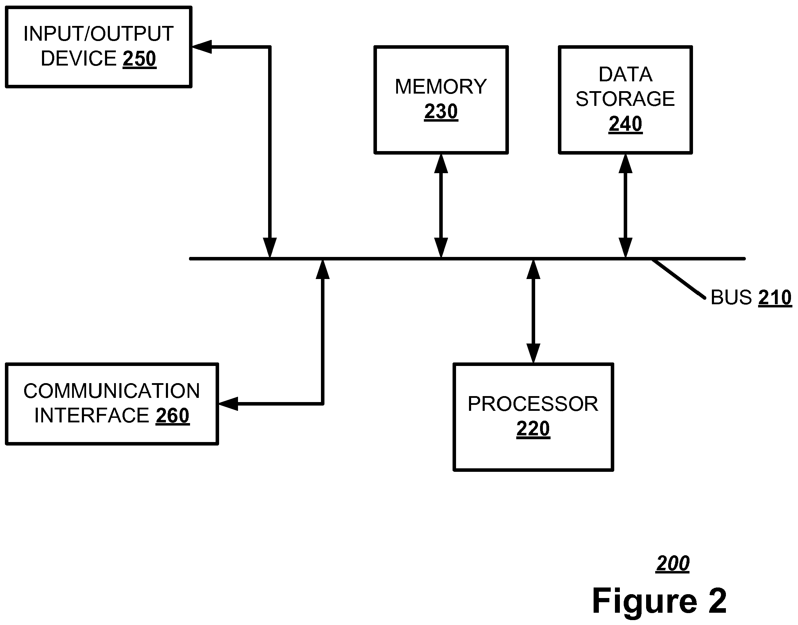

FIG. 2 illustrates a block diagram of an exemplary computing device 200 which may act as a client device 110 or a synchronization server 120. The computing device 200 may combine one or more of hardware, software, firmware, and system-on-a-chip technology to implement a client device 110 or a synchronization server 120. The computing device 200 may include a bus 210, a processor 220, a memory 230, a data storage 240, an input/output device 250, and a communication interface 260. The bus 210, or other component interconnection, may permit communication among the components of the computing device 200.

The processor 220 may include at least one conventional processor or microprocessor that interprets and executes a set of instructions. The memory 230 may be a random access memory (RAM) or another type of dynamic data storage that stores information and instructions for execution by the processor 220. The memory 230 may also store temporary variables or other intermediate information used during execution of instructions by the processor 220. The data storage 240 may include a conventional ROM device or another type of static data storage that stores static information and instructions for the processor 220. The data storage 240 may include any type of tangible machine-readable medium, such as, for example, magnetic or optical recording media, such as a digital video disk, and its corresponding drive. A tangible machine-readable medium is a physical medium storing machine-readable code or instructions, as opposed to a signal. Having instructions stored on computer-readable media as described herein is distinguishable from having instructions propagated or transmitted, as the propagation transfers the instructions, versus stores the instructions such as can occur with a computer-readable medium having instructions stored thereon. Therefore, unless otherwise noted, references to computer-readable media/medium having instructions stored thereon, in this or an analogous form, references tangible media on which data may be stored or retained. The data storage 240 may store a set of instructions detailing a method that when executed by one or more processors cause the one or more processors to perform the method. The data storage 240 may also be a database or a database interface for storing an event identifier log.

The input/output device 250 may include one or more conventional mechanisms that permit a user to input information to the computing device 200, such as a keyboard, a mouse, a voice recognition device, a microphone, a headset, a gesture recognition device, a touch screen, etc. The input/output device 250 may include one or more conventional mechanisms that output information to the user, including a display, a printer, one or more speakers, a headset, or a medium, such as a memory, or a magnetic or optical disk and a corresponding disk drive. The communication interface 260 may include any transceiver-like mechanism that enables computing device 200 to communicate with other devices or networks. The communication interface 260 may include a network interface or a transceiver interface. The communication interface 260 may be a wireless, wired, or optical interface.

The computing device 200 may perform such functions in response to processor 220 executing sequences of instructions contained in a computer-readable medium, such as, for example, the memory 230, a magnetic disk, or an optical disk. Such instructions may be read into the memory 230 from another computer-readable medium, such as the data storage 240, or from a separate device via the communication interface 260.

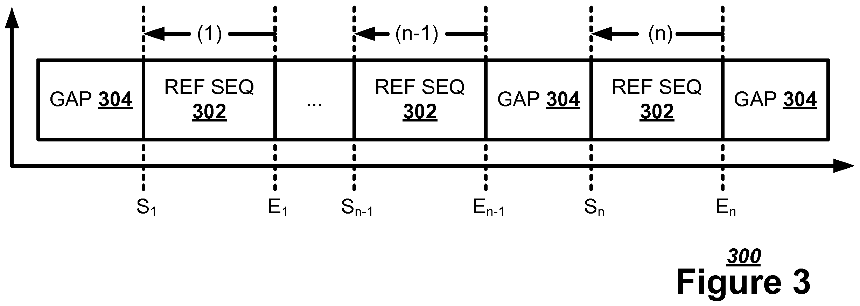

The synchronization server 120 may maintain an event identifier log to track events to synchronize. FIG. 3 illustrates, in a block diagram, one embodiment of an event identifier log 300. An event identifier log 300 is a log of a series of application events. For example, a chat server may keep an event identifier log 300 with each event representing a single chat message. The event identifier log 300 may collect each event that occurs at the synchronization server 120, or just the events related to a specific client identifier. An event may be identified based on the arrival time to the millisecond. The event identifier log 300 may describe one or more reference event sequences (REF SEQ) 302. A reference event sequence 302 is a series of events that have been downloaded to a client device 110. The reference event sequence 302 may be defined by the earliest event sent in a synchronization sequence, referred to as a starting event, and the final event sent in a synchronization sequence, referred to as an ending event. The synchronization server 120 may send multiple reference event sequences 302 in a synchronization package. Ranges of undelivered event identifiers may be referred to as gaps 304. The synchronization server 120 may collect the reference event sequences to create a synchronization state reference. The synchronization server 120 may use the synchronization state reference to determine the synchronization update to send to a client device 110.

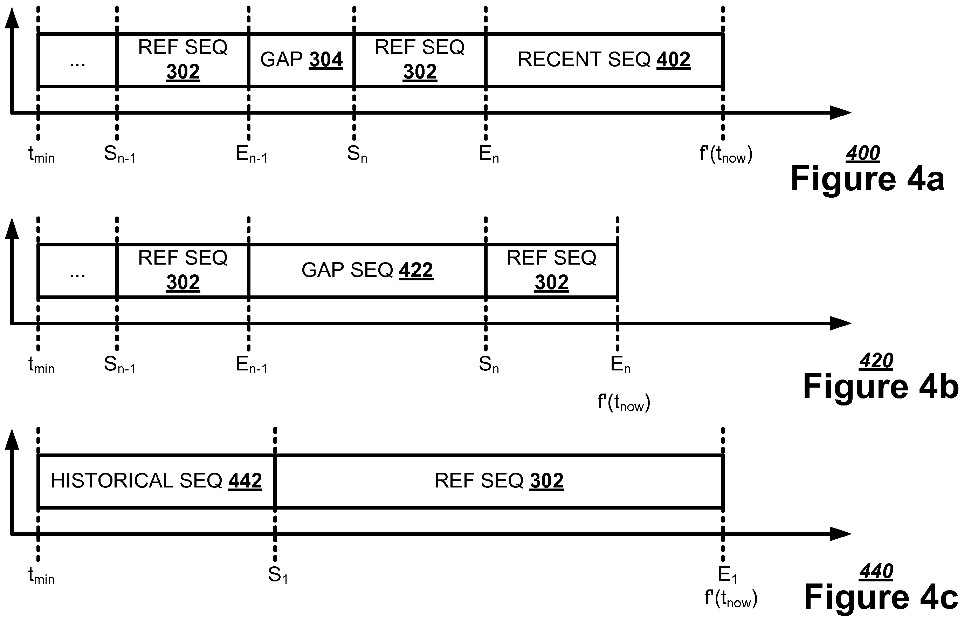

FIG. 4a illustrates, in a block diagram, one embodiment of a recent synchronization update 400. The synchronization server 120 may determine that a client device 110 is requesting a synchronization of any event since the last synchronization. The synchronization server 120 may send a recent event sequence 402, or events after the most recently synchronized reference event sequence 302.

FIG. 4b illustrates, in a block diagram, one embodiment of a gap synchronization update 420. The synchronization server 120 may determine that a client device 110 is requesting a synchronization of any event in a gap 304 between synchronizations. The gap 304 may occur because of limited synchronization resources during the most recent synchronization. The synchronization server 120 may send a gap event sequence 422 to the client device 110.

FIG. 4c illustrates, in a block diagram, one embodiment of a historical synchronization update 440. The synchronization server 120 may determine that a client device 110 is requesting a synchronization of any event prior to the initial reference event sequence 302. The client device 110 may indicate a historical synchronization request using a time identifier. The synchronization server 120 may send a historical event sequence 442.

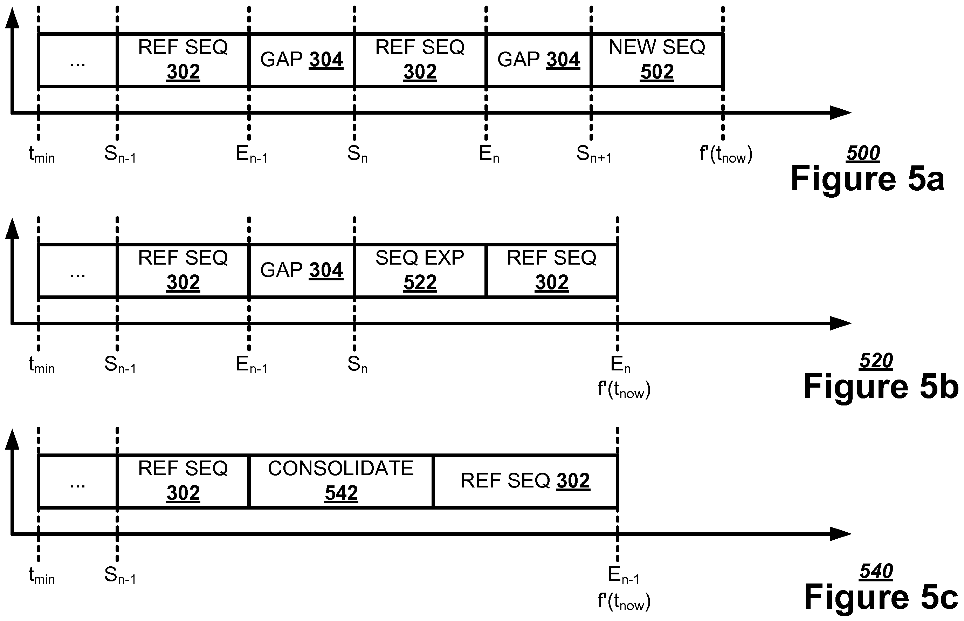

The synchronization server 120 may update the synchronization state reference to keep the size of the synchronization state reference small. FIG. 5a illustrates, in a block diagram, one embodiment of a synchronization state reference addition 500. A client device 110 may send a synchronization request for a recent set of events. The synchronization server 120 may send a reference event sequence 302 to the client device 110. The synchronization server 120 may add a new reference event sequence 502 to the synchronization state reference.

FIG. 5b illustrates, in a block diagram, one embodiment of a synchronization state reference expansion 520. A client device 110 may send a synchronization request for a set of events adjacent to the reference event sequence 302. The synchronization server 120 may send an adjacent reference event sequence 302 to the client device 110. The synchronization server 120 may perform a sequence expansion (SEQ EXP) 522 on the original reference event sequence 302 in the synchronization state reference.

FIG. 5c illustrates, in a block diagram, one embodiment of a synchronization state reference consolidation 540. A client device 110 may send a synchronization request for the gap 304 between reference event sequences 302. The synchronization server 120 may send the gap event sequence 422 to the client device 110. The synchronization server 120 may consolidate 542 the reference event sequence 302 with the surrounding reference event sequences 302 in the synchronization state reference.

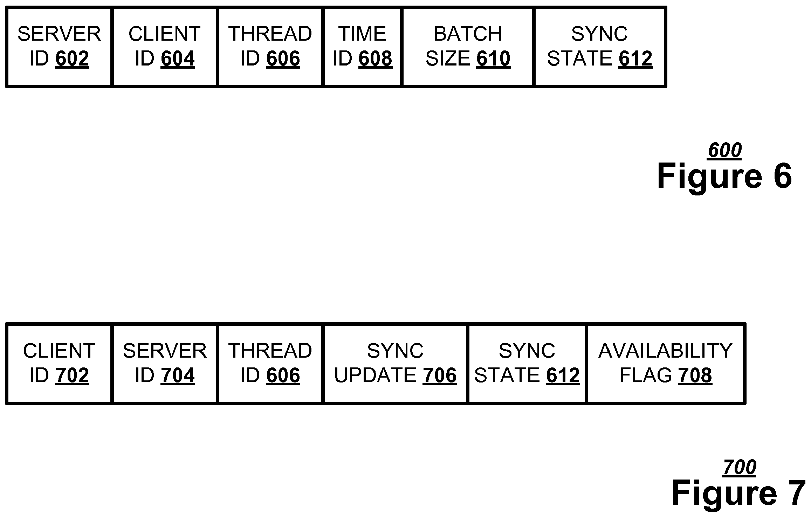

The client device 110 may initiate synchronization by sending a synchronization request. For example, a chat application module 114 may send a chat synchronization request to the synchronization server 120 to initiate synchronization of a chat thread. FIG. 6 illustrates, in a block diagram, one embodiment of a synchronization request 600. The synchronization request 600 may have a server identifier 602 indicating the synchronization server 120 targeted by the synchronization request 600. The synchronization request 600 may have a client identifier 604 indicating the client device 110 sending the synchronization request 600. The synchronization request 600 may have a conversation thread identifier 606 indicating the conversation thread event list that the client device 110 is seeking to update. The synchronization request 600 may have a time identifier 608 indicating the time frame for the events that the client device 110 is seeking to synchronize. The synchronization request 600 may have a batch size field 610 indicating the number of events to synchronize. The synchronization request 600 may have a client-opaque synchronization state reference 612 describing the events that the client device 110 has previously synchronized.

The synchronization server 120 may respond to the synchronization request 600 with a synchronization package. FIG. 7 illustrates, in a block diagram, one embodiment of a synchronization package 700. The synchronization package 700 may have a client identifier 702 indicating the client device 110 targeted by the synchronization package 700. The synchronization package 700 may have a server identifier 704 indicating the synchronization server 120 sending the synchronization package 700. The synchronization package 700 may have a conversation thread identifier 606 indicating the conversation thread event list that the synchronization package 700 is updating. The synchronization package 700 may have a synchronization update 706 providing updated events for the client device 110. The synchronization package 700 may have an updated synchronization state reference 612 describing the events that the client device 110 has currently synchronized upon receiving the synchronization package 700. The synchronization package 700 may have an availability flag 708 indicating other events are available for synchronization.

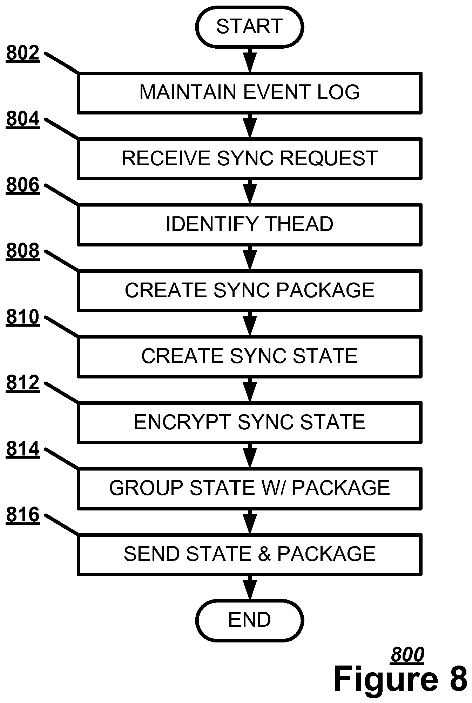

FIG. 8 illustrates, in a flowchart, one embodiment of a method 800 for executing an initial synchronization at the synchronization server 120. The synchronization server 120 may maintain an event identifier log 300 (Block 802). The synchronization server 120 may receive a synchronization request 600 from a client device 110 (Block 804). The synchronization server 120 may identify a conversation thread event list from the synchronization request 600 (Block 806). The synchronization server 120 may create a synchronization package 700 for the conversation thread event list (Block 808). The synchronization server 120 may create a synchronization state reference 612 from an initial reference event sequence 302 (Block 810). The synchronization server 120 may encrypt the synchronization state reference 612 to create a client-opaque synchronization state reference 612 (Block 812). The synchronization server 120 may group the synchronization state reference 612 with the synchronization package 700 (Block 814). The synchronization server 120 may send a synchronization package 700 having a synchronization state reference 612 to the client device 110 (Block 816).

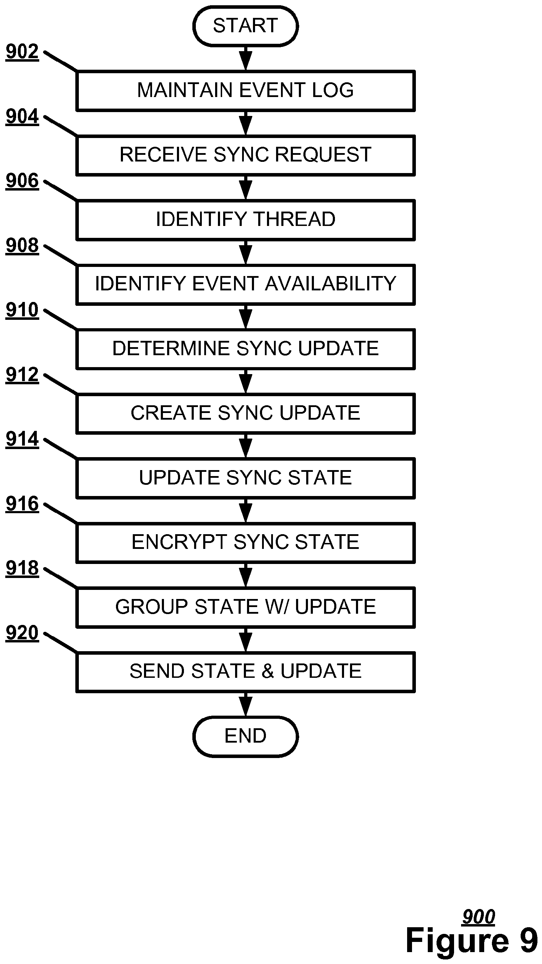

FIG. 9 illustrates, in a flowchart, one embodiment of a method 900 for executing a synchronization update at the synchronization server 120. The synchronization server 120 may maintain an event identifier log 300 (Block 902). The synchronization server 120 may receive a synchronization request 600 with a synchronization state reference from a client device 110 (Block 904). The synchronization server 120 may identify a conversation thread event list from the synchronization request 600 (Block 906). The synchronization server 120 may identify an unsynchronized event availability from the synchronization state reference 612 (Block 908). The synchronization server 120 may determine a synchronization update 706 based on the synchronization state reference 612 (Block 910). The synchronization server 120 may create a synchronization update 706 based on the synchronization state reference 612 (Block 912). The synchronization server 120 may update the synchronization state reference 612 based on the synchronization update 706 (Block 914). The synchronization server 120 may encrypt the synchronization state reference 612 to create a client-opaque synchronization state reference 612 (Block 916). The synchronization server 120 may group the synchronization state reference 612 with the synchronization update 706 of the synchronization package 700 (Block 918). The synchronization serve 120 may send a synchronization package 700 having a synchronization state reference 612 and a synchronization update 706 to the client device 110 (Block 920).

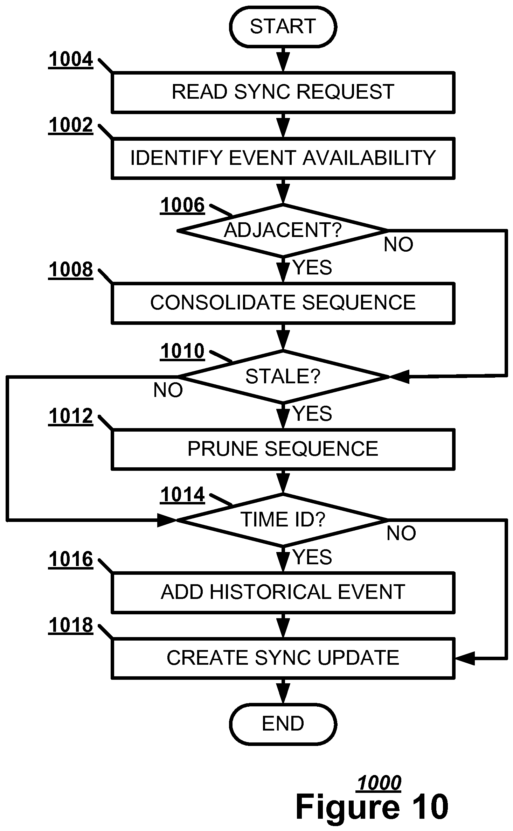

FIG. **10** illustrates, in a flowchart, one embodiment of a method 1000 for updating a synchronization state reference at the synchronization server 120. The synchronization server 120 may read a synchronization request 600 (Block 1002). The synchronization server 120 may identify an unsynchronized event availability from the synchronization state reference 612 (Block 1004). If the synchronization request 600 seeks an adjacent event sequence next to a reference event sequence 302 (Block 1006), the synchronization server 120 may consolidate 542 the reference event sequence 302 of the synchronization state reference 612 with an adjacent event sequence (Block 1008).

If a reference event sequence 302 of the synchronization state reference 612 is stale (Block 1010), the synchronization server 120 may prune the stale event sequence 302 of the synchronization state reference 612 (Block 1012). A reference event sequence 302 is stale when a freshness period for the synchronization state reference 612 is reached. The freshness period may be contingent on the capabilities of the client device 110.

If a time identifier exceeds the oldest event in the synchronization state reference 612 (Block 1014), the synchronization server 120 may add a historical event sequence 442 to the synchronization update 706 based on a time identifier 608 of the synchronization request 600 (Block 1016). The synchronization server 120 may create a synchronization update 706 for the synchronization package 700 (Block 1018).

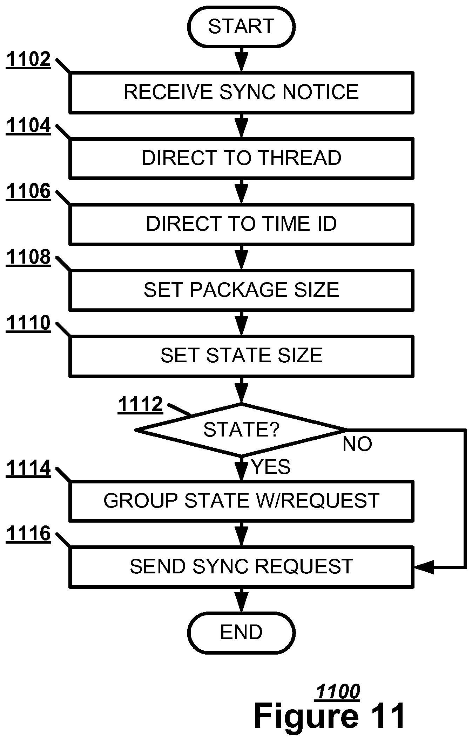

FIG. **11** illustrates, in a flowchart, one embodiment of a method 1100 for sending a synchronization request 600 from a client device 110. The client device 110 may receive a synchronization notice for an application module 114, either from the application module or from the user (Block 1102). The client device 110 may direct the synchronization request to a conversation thread event list (Block 1104). The client device 110 may direct the synchronization request to before a time identifier (Block 1106). The client device 110 may set a synchronization package size (Block 1108). The client device 110 may set a synchronization state reference size (Block 1110). If the client device 110 has already received a client-opaque synchronization state reference 612 (Block 1112), the client device 110 may group the client-opaque synchronization state reference 612 with the synchronization request 600 (Block 1114). The client device 110 may send a synchronization request 600 with the client-opaque synchronization state reference 612 to the synchronization server 120 (Block 1116).

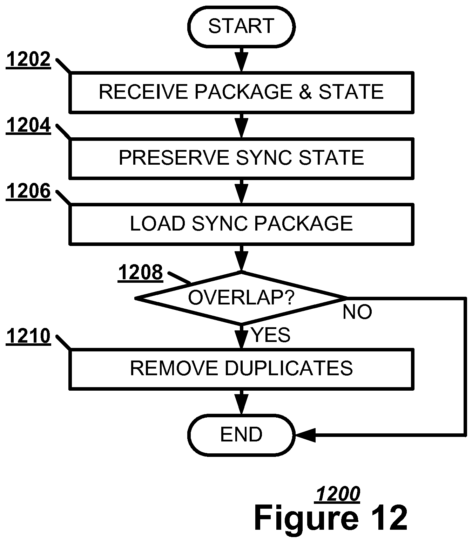

FIG. **12** illustrates, in a flowchart, one embodiment of a method 1200 for receiving a synchronization package 700 at a client device 110. The client device 110 may receive a synchronization package 700 having a client-opaque synchronization state reference 612 from a synchronization server 120 (Block 1202). The client device 110 may preserve the client-opaque synchronization state reference 612 (Block 1204). The client device 110 may load the synchronization package 700 (Block 1206). As a stale event sequence 302 may be pruned from the client-opaque synchronization state reference 612, the synchronization package 700 may have duplicate events. If an event in the synchronization package 700 overlaps with an event stored at the client device 110 (Block 1208), the client device 110 may remove a duplicate event received in a synchronization package (Block 1210).

Although the subject matter has been described in language specific to structural features and/or methodological acts, it is to be understood that the subject matter in the appended claims is not necessarily limited to the specific features or acts described above. Rather, the specific features and acts described above are disclosed as example forms for implementing the claims.

Embodiments within the scope of the present invention may also include computer-readable storage media for carrying or having computer-executable instructions or data structures stored thereon. Such computer-readable storage media may be any available media that can be accessed by a general purpose or special purpose computer. By way of example, and not limitation, such computer-readable storage media can comprise RAM, ROM, EEPROM, CD-ROM or other optical disk storage, magnetic disk storage or other magnetic data storages, or any other medium which can be used to carry or store desired program code means in the form of computer-executable instructions or data structures. Combinations of the above should also be included within the scope of the computer-readable storage media.

Embodiments may also be practiced in distributed computing environments where tasks are performed by local and remote processing devices that are linked (either by hardwired links, wireless links, or by a combination thereof) through a communications network.

Computer-executable instructions include, for example, instructions and data which cause a general purpose computer, special purpose computer, or special purpose processing device to perform a certain function or group of functions. Computer-executable instructions also include program modules that are executed by computers in stand-alone or network environments. Generally, program modules include routines, programs, objects, components, and data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Although the above description may contain specific details, they should not be construed as limiting the claims in any way. Other configurations of the described embodiments are part of the scope of the disclosure. For example, the principles of the disclosure may be applied to each individual user where each user may individually deploy such a system. This enables each user to utilize the benefits of the disclosure even if any one of a large number of possible applications do not use the functionality described herein. Multiple instances of electronic devices each may process the content in various possible ways. Implementations are not necessarily in one system used by all end users. Accordingly, the appended claims and their legal equivalents should only define the invention, rather than any specific examples given.

## Claims

1. A tangible machine-readable medium having a set of instructions detailing a method stored thereon that when executed by one or more processors cause the one or more processors to perform the method, the method comprising:
receiving a client-opaque synchronization state reference from a synchronization server (120) at a client device (110), said client-opaque synchronization state reference being indecipherable by the client device and comprising a list of sequences of event identifiers delivered to the client device (110);
preserving the client-opaque synchronization state reference at the client device (110); and
sending a chat synchronization request with the client-opaque synchronization state reference to the synchronization server (120).

2. The tangible machine-readable medium of claim 1, wherein the method further comprises:
directing the synchronization request to a conversation thread event list.

3. The tangible machine-readable medium of claim 1, wherein the method further comprises:
removing a duplicate event received in a synchronization package.

4. A synchronization server (120), comprising:
a communication interface configured to send a client-opaque synchronization state reference to a client device (110) and to receive a chat synchronization request with the client-opaque synchronization state reference from the client device (110), said client-opaque synchronization state reference being indecipherable by the client device and comprising a list of sequences of event identifiers delivered to a client device (110); and
a processor configured to determine a synchronization update based on the client-opaque synchronization state reference.

5. The synchronization server of claim 4, further comprising:
a data storage that stores an event identifier log.

## Patentansprüche

1. Materielles maschinenlesbares Medium mit einer Menge von Instruktionen, die ein darauf gespeichertes Verfahren beschrieben und die, wenn sie von einem oder mehreren Prozessoren ausgeführt werden, den einen oder die mehreren Prozessoren dazu veranlassen, das Verfahren auszuführen, wobei das Verfahren umfasst:
Empfangen einer Client-intransparenten Synchronisations-Zustands-Referenz von einem Synchronisations-Server (120) bei einer Client-Vorrichtung (110), wobei die Client-intransparente Synchronisations-Zustands-Referenz für die Client-Vorrichtung unentzifferbar ist und eine Liste von Sequenzen an die Client-Vorrichtung (110) gelieferten Ereignis-Kennungen umfasst;
Bewahren der Client-intransparenten Synchronisations-Zustands-Referenz bei der Client-Vorrichtung (110); und
Senden einer Gesprächs-Synchronisations-Anfrage mit der Client-intransparenten Synchronisations-Zustands-Referenz an den Synchronisations-Server (120).

2. Materielles maschinenlesbares Medium nach Anspruch 1, wobei das Verfahren weiterhin umfasst:
Leiten der Synchronisations-Anfrage an eine Konversationsfaden-Ereignisliste.

3. Materielles maschinenlesbare Medium nach Anspruch 1, wobei das Verfahren weiterhin umfasst:
Entfernen eines in einem Synchronisations-Paket empfangenen Duplikat-Ereignisses.

4. Synchronisations-Server (120), umfassend:
eine Kommunikationsschnittstelle, die konfiguriert ist um eine Client-intransparente Synchronisations-Zustands-Referenz an eine Client-Vorrichtung (110) zu schicken und eine Gesprächs-Synchronisations-Anfrage mit der Client-intransparenten Synchronisations-Zustands-Referenz von der Client-Vorrichtung (110) zu empfangen, wobei die Client-intransparente Synchronisations-Zustands-Referenz für die Client-Vorrichtung unentzifferbar ist und eine Liste von Sequenzen von an eine Client-Vorrichtung (110) gelieferten Ereignis-Kennungen umfasst; und
ein Prozessor, der konfiguriert ist um ein Synchronisations-Update basierend auf der Client-intransparenten Synchronisations-Zustands-Referenz zu bestimmen.

5. Synchronisations-Sever nach Anspruch 4, weiterhin umfassend: einen Datenspeicher, der ein Ereignis-Kennungs-Protokoll speichert.

## Revendications

1. Support lisible par machine tangible présentant un ensemble d'instructions détaillant un procédé stocké sur le support, lequel ensemble d'instructions, lorsqu'il est exécuté par un ou plusieurs processeurs, amène ledit un ou lesdits plusieurs processeurs à mettre en oeuvre le procédé, le procédé comprenant les étapes ci-dessous consistant à :
recevoir une référence d'état de synchronisation opaque pour les dispositifs clients, en provenance d'un serveur de synchronisation (120), au niveau d'un dispositif client (110), ladite référence d'état de synchronisation opaque pour les dispositifs clients étant indéchiffrable par le dispositif client et comprenant une liste de séquences d'identifiants d'événements délivrée au dispositif client (110) ;
conserver la référence d'état de synchronisation opaque pour les dispositifs clients au niveau du dispositif client (110) ; et
envoyer une demande de synchronisation de discussion en direct avec la référence d'état de synchronisation opaque pour les dispositifs clients au serveur de synchronisation (120).

2. Support lisible par machine tangible selon la revendication 1, dans lequel le procédé comporte en outre l'étape ci-dessous consistant à :
diriger la demande de synchronisation vers une liste d'événements de fil de conversation.

3. Support lisible par machine tangible selon la revendication 1, dans lequel le procédé comporte en outre l'étape ci-dessous consistant à :
supprimer un doublon d'événement reçu dans un paquet de synchronisation.

4. Serveur de synchronisation (120), comprenant :
une interface de communication configurée de manière à envoyer une référence d'état de synchronisation opaque pour les dispositifs clients, à un dispositif client (110), et à recevoir une demande de synchronisation de discussion en direct avec la référence d'état de synchronisation opaque pour les dispositifs clients, en provenance du dispositif client (110), ladite référence d'état de synchronisation opaque pour les dispositifs clients être indéchiffrable par le dispositif client et comprenant une liste de séquences d'identifiants d'événements délivrée à un dispositif client (110) ; et
un processeur configuré de manière à déterminer une mise à jour de synchronisation sur la base de la référence d'état de synchronisation opaque pour les dispositifs clients.

5. Serveur de synchronisation selon la revendication 4, comprenant en outre :
un magasin de stockage de données qui stocke un journal d'identifiants d'événements.
